# EUROPÄISCHE PATENTSCHRIFT

(11) **EP 2 458 765 B1**
(45) Veröffentlichungstag und Bekanntmachung des Hinweises auf die Patenterteilung: **28.08.2013**
(21) Anmeldenummer: 10192572.5
(22) Anmeldetag: 25.11.2010
(51) Int. Cl.: H04L 1/00

(54) **Vorrichtung zur Steuerung von Kommunikationsabläufen**
Device for controlling communication processes
Dispositif destiné à la commande de déroulements de communication

(43) Veröffentlichungstag der Anmeldung: 30.05.2012
(73) Patentinhaber: Siemens Aktiengesellschaft, 80333 München (DE)
(72) Erfinder: Steindl, Günter, 92284, Poppenricht (DE)

(56) Entgegenhaltungen:
- US-A- 6 016 308
- US-B1- 6 442 161
- SIEMENS AG: "ERTEC 200 / Enhanced Real-Time Ethernet Controller / Handbuch / Version 1.1.2", , 8. Mai 2010 (2010-05-08), Seiten 1-96, XP002637651, Gefunden im Internet: URL:http://support.automation.siemens.com/ WW/llisapi.dll/23234782?func=ll&objId=2323 4782&objAction=csView&nodeid0=18882258&lan g=de&siteid=cseus&aktprim=0&extranet=stand ard&viewreg=WW&load=content [gefunden am 2011-05-02]
- SIEMENS AG: "ERTEC 400 / Enhanced Real-Time Ethernet Controller / Handbuch / Version 1.2.2", , 8. Mai 2010 (2010-05-08), Seiten 1-98, XP002637652, Gefunden im Internet: URL:http://support.automation.siemens.com/ WW/llisapi.dll/21631481?func=ll&objId=2163 1481&objAction=csView&nodeid0=18977720&ehb id=html_00%2Fehb%2F21631481.htm&nodeid=216 34799&lang=de&siteid=cseus&aktprim=0&extra net=standard&viewreg=WW&load=content&csQue ry0=ERTEC%20400&subtype=133300 [gefunden am 2011-05-02]

## Beschreibung

Die Erfindung betrifft eine Vorrichtung ausgestaltet zur Steuerung von Kommunikationsabläufen mit einem Ethernet-Controller, welcher als ein integrierter Schaltkreis ausgestaltet ist, aufweisend eine erste Schnittstelle zur Kommunikation mit einem Prozessorsystem, einen ersten Port, welcher mit einem ersten Modulationsbaustein verbunden ist, wobei der integrierte Schaltkreis derart ausgestaltet ist, dass diese Verbindung für Eingangsdaten einen Eingangssignalweg bildet, einen zweiten Port, welcher mit einem zweiten Modulationsbaustein verbunden ist, wobei der integrierte Schaltkreis derart ausgestaltet ist, dass diese Verbindung für Ausgangsdaten einen Ausgangssignalweg bildet.

Derartige Vorrichtungen, insbesondere ein Ethernet-Controller, sind beispielsweise aus dem Dokument "ERTEC 200 Handbuch, Version 1.1.0" bekannt. Hier wird ein ERTEC 200, also ein Ethernet-Controller, für die Realisierung von Profinet Devices mit RT- und IRT-Funktionalität beschrieben. Dieser Ethernet-Controller (ERTEC 200) kann beispielsweise so konfiguriert sein, dass er einen Eingangssignalweg (Inbound, einlaufend, Eingänge) und einen Ausgangssignalweg (Outbound, auslaufend, Ausgänge) aufweist. Nach dem bekannten Stand der Technik wird bei einem Inbound durch Maßnahmen in dem Ethernet-Controller unter Berücksichtigung einer maximalen Leistungsfähigkeit des Ethernet-Controllers für die einlaufenden Signale eine Checksumme berechnet.

Bei einem Outbound, also dem Bereitstellen von Ausgangsdaten über einen Ausgangssignalweg, müssten, um die angestrebte Performance zu erreichen, im Prozessorsystem (Host) bei jedem Zugriff vor dem Senden Checksummen berechnet werden, was zu Lasten der Rechenleistung des Hostes geht. Es ist daher die Aufgabe der Erfindung eine Vorrichtung bereitzustellen bzw. eine Möglichkeit zu finden, um eine maximale Performance auch bei Outbound Vorgängen zu erreichen.

Bei der Vorrichtung mit den Merkmalen des Oberbegriffes des Anspruchs 1 wird die Aufgabe dadurch gelöst, dass zwischen dem zweiten Port und dem zweiten Modulationsbaustein ein Baustein angeordnet und ausgestaltet ist, für die Ausgangsdaten eine Prüfsumme zu berechnen, wobei der Baustein einen Aktivierungseingang aufweist, welcher mit dem Prozessorsystem verbunden ist um auf Anforderung des Prozessorsystems die Prüfsummenberechnung bei Absetzen der Ausgangsdaten über den Ausgangssignalweg zu starten, um dem Baustein bereits im Vorfeld mitzuteilen , dass neue Dtaen zum Senden abgesetzt werden. Erfindungsgemäß wird einem Ethernet-Controller ein weiterer Baustein hinzugefügt, in welchem ein Berechnungsprogramm für Checksummen von Ethernet-Telegrammen enthalten ist. Über einen eigenständigen Zugang zu diesem Baustein kann das Prozessorsystem (Host) bei Absetzen von Ausgangsdaten über den Ausgangssignalweg dem Baustein bereits im Vorfeld mitteilen, dass neue Daten zum Senden abgesetzt werden. Dadurch, dass der Baustein die Berechnung für die Checksummen- bzw. die Prüfsummenberechnung eigenständig übernimmt, wird der Ethernet-Controller und das Prozessorsystem entlastet, wodurch ein Performance-Gewinn erzielt wird.

Vorteilhafterweise ist der Baustein weiterhin dazu ausgestaltet, einem Telegrammaufbau, welcher die Ausgangsdaten enthält, die Prüfsumme zuzufügen und eine Blockprüfzeichenfolge zu aktualisieren.

Weiterhin ist es vorteilhaft, wenn der zweite Port an ein Medium-Independent-Interface des integrierten Bausteins angeschlossen ist.

Vorzugsweise ist der Baustein als ein frei programmierbarer Baustein, insbesondere als ein Field-Programmable-Gate-Array ausgestaltet.

Weiterhin ist es vorgesehen, dass die Modulationsbausteine als Transceiver für eine Profinet-Kommunikation, insbesondere eine Isochrone-Real-Time Kommunikation, ausgestaltet sind.

Insbesondere im Hinblick auf eine mögliche Erweiterung von bereits existierenden elektrischen Kommunikationsgeräten, welche die Profinet-Kommunikation benutzen, ist es vorteilhaft, wenn die Vorrichtung als eine Trägervorrichtung ausgestaltet ist, wobei der integrierte Schaltkreis, die Modulationsbausteine, der Baustein und eine Verbindung zum Prozessorsystem darauf angeordnet sind, wobei diese Trägervorrichtung weiterhin eine Pinanordnung zum Einstecken in ein Automatisierungsgerät aufweist.

In der Prozessautomatisierung werden vielfach Feldgeräte eingesetzt, die zur Erfassung und/oder Beeinflussung von Eigenschaften eines Prozesses dienen. Als Feldgeräte werden im Prinzip alle Geräte bezeichnet, die prozessnah eingesetzt werden und die prozessrelevante Informationen liefern oder verarbeiten. Um die Kommunikation zwischen den Feldgeräten und den Automatisierungskomponenten, speicherprogrammierbaren Steuerungen, Einsteckkarten für Leitsysteme, usw. zu beschleunigen und damit den industriellen Prozess zu optimieren, ist das Prozessorsystem ein externes Host-Prozessorsystem, insbesondere ein Prozessorsystem in einen Profinet-Gerät aus der industriellen Automatisierungstechnik.

Ausgestaltungsbeispiele sind in der Zeichnung näher erläutert. Es zeigen:
- FIG 1: eine Vorrichtung zur Steuerung von Kommunikationsabläufen im Profinet,
- FIG 2: einen Telegrammaufbau eines Ethernet-Telegrammes,
- FIG 3: die aus FIG 1 bekannte Vorrichtung auf einer Trägervorrichtung zum Einstecken in ein Automatisierungsgerät, und
- FIG 4: eine alternative Ausgestaltung der Vorrichtung.

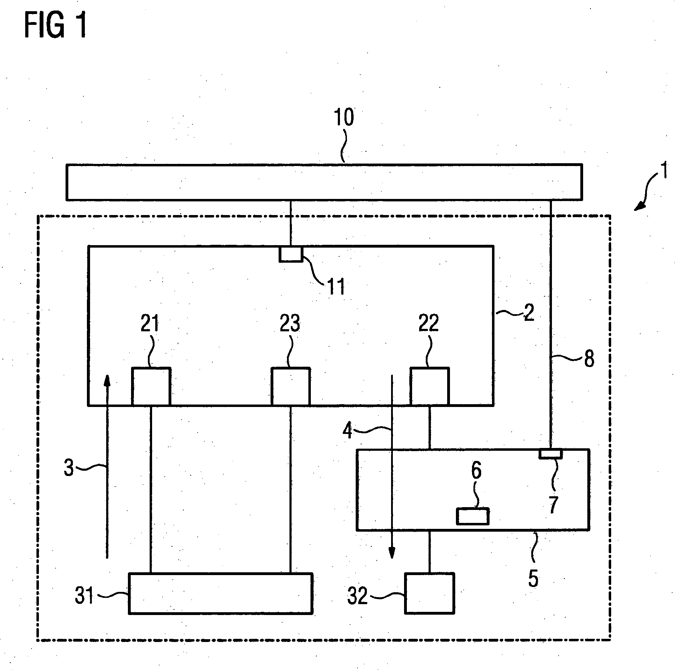

Gemäß FIG 1 ist eine Vorrichtung 1 zur Steuerung von Kommunikationsabläufen, beispielsweise in einer Profinet-Umgebung, dargestellt. Die Vorrichtung 1 weist dazu einen integrierten Schaltkreis 2 auf, welcher beispielsweise als ein ERTEC 200-Baustein oder im Wesentlichen mit der Funktionalität eines ERTEC 200-Baustein ausgestaltet ist. Der integrierte Schaltkreis 2 ermöglicht eine Ethernet-Kommunikation zwischen einem Prozessorsystem 10 und Modulationsbausteinen 31,32.

Wie dem Fachmann bekannt, ist an die Modulationsbausteine 31,32 selbstverständlich ein geeignetes Kommunikationsnetzwerk, wie beispielsweise ein Ethernet als ein Feldbus angeschlossen.

Für eine Kommunikation zwischen dem Feldbus und dem Prozessorsystem 10 steht ein Eingangssignalweg 3 und ein Ausgangssignalweg 4 zur Verfügung. Der Fachmann benennt den Eingangssignalweg 3 auch als ein Inbound und den Ausgangssignalweg 4 als ein Outbound.

Im Hinblick auf eine Optimierung für die Isochrone-Real-Time Kommunikation (IRT), speziell für ein Dynamic Frame Packaging (DFP) kann die Outboundrichtung optimiert werden.

Bei Inbound (einlaufend, Eingänge) wird durch Maßnahmen im integrierten Schaltkreis 2, wie er beispielsweise durch den ERTEC 200 bekannt ist, ein Betrieb an einer Standardhardware unter Erhaltung der erreichbaren Performance möglich.

Um eine maximale Performance auch bei einem Outbound zu erreichen, wurde eine Möglichkeit gefunden, Prüfsummen für Ausgangsdaten des Ausgangssignalweges 4 bereitzustellen ohne das Prozessorsystem 10 oder den integrierten Schaltkreis 2 zusätzlich zu belasten.

Dazu ist zwischen dem zweiten Port 22 und dem zweiten Modulationsbaustein 32 ein Baustein 5 angeordnet, wobei dieser Baustein 5 ausgestaltet ist, für die Ausgangsdaten über den Ausgangssignalweg 4 eine Prüfsumme 6 zu berechnen. Um diese Berechnung zu starten, weist der Baustein 5 einen Aktivierungseingang 7 auf, welcher mit dem Prozessorsystem 10 verbunden ist, um auf Anforderung des Prozessorsystems 10 die Prüfsummenberechnung zu starten. Das Prozessorsystem 10 ist zum Starten der Prüfsummenberechnung über eine Verbindung 8 mit dem Baustein 5 datentechnisch verbunden.

Eingangsdaten, welche über den Eingangssignalweg 3 in den integrierten Schaltkreis 2 gelangen und zum Prozessorsystem 10 über die erste Schnittstelle 11 weitergeleitet werden können mittels des ersten Modulationsbausteins 31 auf einen ersten Port 21 und einem zweiten Port 22 von dem Feldbus entgegengenommen werden.

Ein als Ethernet-Controller ausgestalteter integrierter Schaltkreis 2 weist ein Medium-Independent-Interface (MII) auf, dieses Medium-Independent-Interface ist an dem zweiten Port 22 angeschlossen.

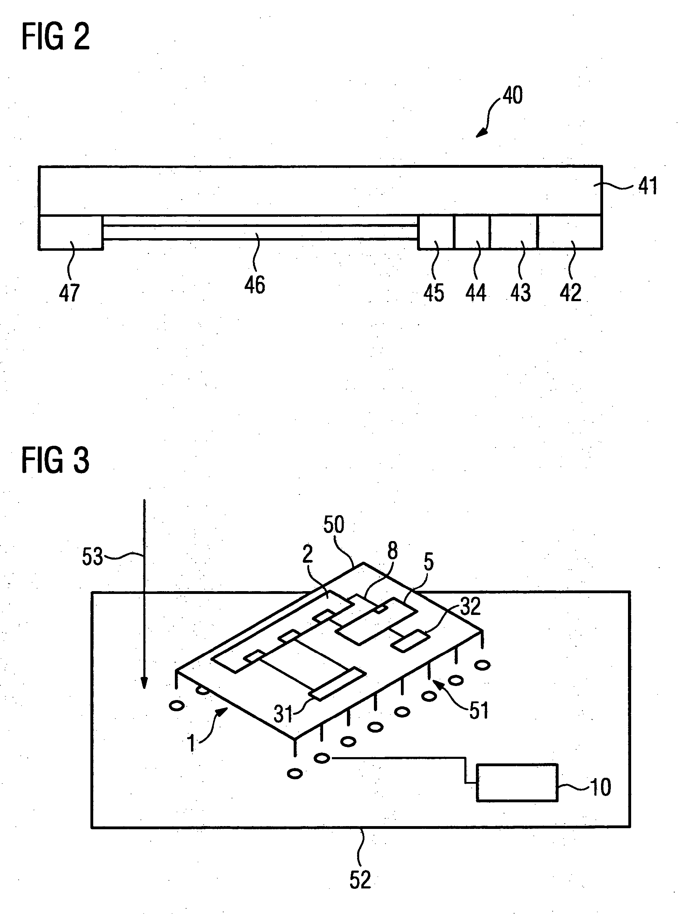

Mit der FIG 2 wird ein möglicher Telegrammaufbau 40 aufgezeigt. Die Eingangsdaten über den Eingangssignalweg 3 und die Ausgangsdaten über den Ausgangssignalweg 4 weisen die Struktur des Telegrammaufbaus 40 auf. Ein Ethernet-Frame 41 enthält von rechts nach links betrachtet, eine Blockprüfzeichenfolge 42, auch bekannt als ein FCS, beispielsweise mit der Länge von 4 Byte, einen 1 Byte langen Status 43, einen 1 Byte langen Data Status 44, einen 2 Byte langen Cycle Counter 45, beispielsweise 1490 Bytes Nutzdaten 46 und die 2 Byte lange FrameId 47. Bei den Ausgangsdaten wird durch den Baustein 5 berechnete Prüfsumme in dem Telegrammaufbau 40 eingetragen. Dabei wird die Blockprüfzeichenfolge 42 aktualisiert und zusätzlich wird das Feld Cyle Counter 45 passend inkrementiert. Gemäß FIG 3 ist eine Vorrichtung 1 auf einer Trägervorrichtung 50 dargestellt. Die Vorrichtung 1 weist die aus FIG 1 bekannten Komponenten den integrierten Schaltkreis 2, die Modulationsbausteine 31,32, den Baustein 5 und die Verbindung 8 zum Prozessorsystem 10 auf. Die Trägervorrichtung 50 weist zusätzlich eine Pinanordnung 51 zum Einstecken in ein Automatisierungsgerät 52 auf. Durch den Aufbau eines bereits existierenden Ethernet-Controllers mit dem zusätzlichen Baustein 5 auf einer Trägervorrichtung 50 kann eine Single Chip Lösung bereitgestellt werden, welche beispielsweise zum Nachrüsten von Profinet-Automatisierungsgeräten anhand der Trägervorrichtung mit der Pinanordnung 51 einfach in diese eingesteckt werden kann.

Mit dem Baustein 5 ausgestaltet als ein FPGA kann die Zykluszeit von einer Übertragungszeit ohne FPGA:
Übertragungszeit = Summe (Line Delay) + Summe (Bridge Delay) + Summe (Frame Length)
auf eine Übertragungszeit mit FPGA:
Übertragungszeit = Summe (Line Delay) + Summe (BridgeDelay) + Subframe Length

### reduziert werden.

Eine Ersparnis liegt bei einem Frame von 500 Byte und einem Subframe von 100 Byte bei 400 Byte und
400 • 80ns = 32 µs
also ist die Vorrichtung schneller.

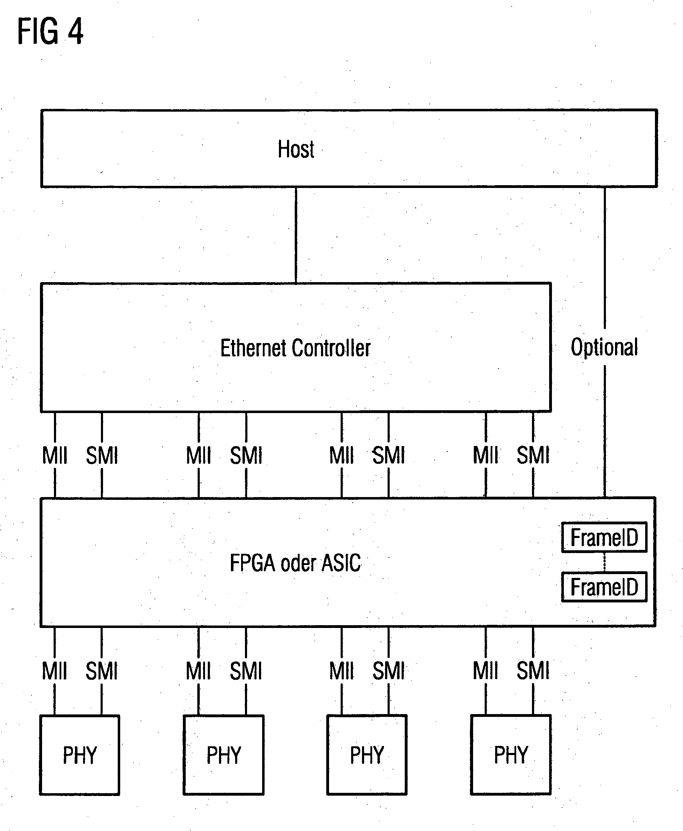

Gemäß FIG 4 ist eine alternative Ausgestaltung der aus FIG 1 bekannten Vorrichtung dargestellt. Von oben nach unten betrachtet weist die Vorrichtung wiederum einen Host auf, einen Ethernet-Controller, Verbindungsleitungen zu einem FPGA oder ASIC, dem FPGA oder ASIC, Verbindungsleitungen von dem FPGA oder dem ASIC zu den bereits genannten Modulationsbausteinen, dargestellt als PHY's, auf. Der Host entspricht dem in FIG 1 dargestellten Prozessorsystem 10, der Ethernet-Controller entspricht dem in FIG 1 dargestellten integrierten Schaltkreis 2 und der FPGA oder ASIC entspricht dem Baustein 5, wobei die aus FIG 1 bekannte Verbindung 8 der optionalen Datenleitung in FIG 4 entspricht.

Im Gegensatz zu der Ausgestaltung nach FIG 1 weist die Vorrichtung nach FIG 4 als Verbindungsleitungen zwischen dem FPGA oder dem ASIC mit den PHY's nun jeweils eine Leitung für ein Medium Independet Interface (MII) und eine Leitung für ein Serial Management Interface (SMI) auf. Die genannten Verbindungsleitungen befinden sich auch als Verbindungsleitungen zwischen dem Ethernet-Controller und dem FPGA oder ASIC. Durch diese Ausgestaltung kann nun für jeden Port (PHY) eine beschleunigte Telegrammbildung durch das Verlagern der Prüfsummenbildung in den FPGA durchgeführt werden. Bei der Ausgestaltung nach FIG 1 wird über die Verbindung 8 im Vorfeld mitgeteilt, dass ein neues Telegramm abgesetzt wird. Diese Mitteilung wird nun über die SMI-Verbindungsleitungen für jeden Port einzeln an den FPGA oder ASIC herangeführt.

Wenn eine Prüfsumme für ein neues Telegramm berechnet werden soll, so wird über den Host dem FPGA die Frame-ID mitgeteilt. Für das Telegramm mit dieser mitgeteilten speziellen Frame-ID soll nun eine erneute Prüfsummenberechnung erfolgen. Kommt das Telegramm mit der genannten Frame-ID über die MII-Verbindung an dem FPGA an, so wird durch die im FPGA implementierte Software erkannt, dass für dieses Telegramm mit dieser genannten Frame-ID eine Berechnung stattfinden soll. Die neue Prüfsumme wird in das Telegramm eingetragen, gegebenenfalls die Blockprüfzeichenfolge aktualisiert und der Field Cycle Counter passend inkrementiert.

## Patentansprüche

1. Vorrichtung (1) ausgestaltet zur Steuerung von Kommunikationsabläufen mit einem Prozessorsystem (10) und einem Ethernet-Controller, welcher als ein integrierter Schaltkreis (2) ausgestaltet ist, aufweisend
- eine erste Schnittstelle (11) zur Kommunikation mit einem Prozessorsystem (10),
- einen ersten Port (21), welcher mit einem ersten Modulationsbaustein (31) verbunden ist, wobei der integrierte Schaltkreis (2) derart ausgestaltet ist, dass diese Verbindung für Eingangsdaten einen Eingangssignalweg (3) bildet,
- einen zweiten Port (22), welcher mit einem zweiten Modulationsbaustein (32) verbunden ist, wobei der Integrierte Schaltkreis (2) derart ausgestaltet ist, dass diese Verbindung für Ausgangsdaten einen Ausgangssignalweg (4) bildet,
**dadurch gekennzeichnet, dass** zwischen dem zweiten Port (22) und dem zweiten Modulationsbaustein (32) ein Baustein (5) angeordnet ist und ausgestaltet ist für die Ausgangsdaten eine Prüfsumme (6) zu berechnen, wobei der Baustein (5) einen Aktivierungseingang (7) aufweist, welcher mit dem Prozessorsystem (10) verbunden ist um auf Anforderung des Prozessorsystem (10) die Prüfsummenberechnung bei Absetzen der Ausgangsdaten über den Ausgangssignalweg zu starten, um dem Baustein bereits im Vorfeld mitzuteilen, dass neue Daten zum Senden abgesetzt werden.

2. Vorrichtung (1) nach Anspruch 1, wobei der Baustein (5) ausgestaltet ist, einem Telegrammaufbau (40), welcher die Ausgangsdaten enthält, die Prüfsumme (6) zu zufügen und eine Blockprüfzeichenfolge (42) zu aktualisieren.

3. Vorrichtung (1) nach Anspruch 1 oder 2, wobei der zweite Port (22) an ein Medium-Independent-Interface (MII) des integrierten Schaltkreises (2) angeschlossen ist.

4. Vorrichtung (1) nach einem der Ansprüche 1 bis 3, wobei der Baustein (5) als ein frei programmierbarer Baustein, insbesondere als ein Field-Programmable-Gate-Array, ausgestaltet ist.

5. Vorrichtung (1) nach einem der Ansprüche 1 bis 4, wobei die Modulationsbausteine (31,32) als Transceiver für eine Profinetkommunikation, insbesondere eine Isochröne-Real-Time Kommunikation, ausgestaltet sind.

6. Vorrichtung (1) nach einem der Ansprüche 1 bis 5, welche als eine Trägervorrichtung (50) ausgestaltet ist, wobei
- der integrierte Schaltkreis (2),
- die Modulationsbausteine (31,32),
- der Baustein (5) und
- eine Verbindung (8) zum Prozessorsystem (10) darauf angeordnet ist,
welche weiterhin eine Pinanordnung (51) zum Einstecken in ein Automatisierungsgerät (52) aufweist.

7. Vorrichtung (1) nach einem der Ansprüche 1 bis 6, wobei das Prozessorsystem (10) ein externes Host-Prozessorsystem ist, insbesondere ein Prozessorsystem (10) in einem Profinet-Gerät aus der industriellen Automatisierungstechnik.

## Claims

1. Device (1) embodied for controlling communication processes by means of a processor system (10) and an Ethernet controller embodied as an integrated circuit (2) and comprising
- a first interface (11) for communicating with a processor system (10),
- a first port (21) which is connected to a first modulation component (31), with the integrated circuit (2) being embodied in such a way that said connection forms an inbound signal path (3) for input data,
- a second port (22) which is connected to a second modulation component (32), with the integrated circuit (2) being embodied in such a way that said connection forms an outbound signal path (4) for output data,
**characterised in that** a component (5) is arranged between the second port (22) and the second modulation component (32) and is embodied for calculating a checksum (6) for the output data, with the component (5) having an activation input (7) which is connected to the processor system (10) in order to start the checksum calculation in response to a prompt from the processor system (10) when the output data is provided via the outbound signal path so as to notify the component already in advance that new data is being provided for sending.

2. Device (1) according to claim 1, wherein the component (5) is embodied to add the checksum (6) to a telegram frame structure (40) which contains the output data and to update a block check character sequence (42) .

3. Device (1) according to claim 1 or 2, wherein the second port (22) is connected to a medium-independent interface (MII) of the integrated circuit (2).

4. Device (1) according to one of claims 1 to 3, wherein the component (5) is embodied as a freely programmable component, in particular as a field-programmable gate array.

5. Device (1) according to one of claims 1 to 4, wherein the modulation components (31,32) are embodied as transceivers for Profinet communication, in particular isochronous real-time communication.

6. Device (1) according to one of claims 1 to 5, which is embodied as a carrier device (50), wherein
- the integrated circuit (2),
- the modulation components (31,32),
- the component (5) and
- a connection (8) to the processor system (10) are arranged on said carrier device (50),
which additionally has a pin arrangement (51) to allow its insertion into an automation device (52).

7. Device (1) according to one of claims 1 to 6, wherein the processor system (10) is an external host processor system, in particular a processor system (10) in a Profinet device from the industrial automation engineering field.

## Revendications

1. Dispositif ( 1 ) conformé pour la commande de déroulements de communication, comprenant un système ( 1 ) de processeur et une unité de commande éthernet, qui est sous la forme d'un circuit ( 2 ) intégré, comprenant
- une première interface ( 11 ) pour la communication avec un système ( 10 ) de processeur,
- un premier accès ( 21 ), qui est relié à un premier module ( 31 ) de modulation, le circuit ( 2 ) intégré étant tel, que cette liaison forme un trajet ( 3 ) de signal d'entrée pour des données d'entrée,
- un deuxième accès ( 22 ), qui est relié à un deuxième module ( 32 ) de modulation, le circuit ( 2 ) intégré étant tel, que cette liaison forme un trajet ( 4 ) de signal de sortie pour des données de sortie,
**caractérisé en ce qu'**un module ( 5 ) est monté entre le deuxième accès ( 22 ) et le deuxième module ( 32 ) de modulation et est conformé pour calculer une somme ( 6 ) de contrôle pour les données de sortie, le module ( 5 ) ayant une entrée ( 7 ) d'activation, qui est reliée au système ( 10 ) de processeur pour déclencher, sur demande du système ( 10 ) de processeur, le calcul de la somme de contrôle, lors de l'émission de données de sortie par le trajet de signal de sortie, pour faire part déjà à l'avance au module, que des données nouvelles sont mises à l'émission.

2. Dispositif ( 1 ) suivant la revendication 1, dans lequel le module ( 5 ) est conformé pour ajouter la somme ( 6 ) de contrôle à une structure ( 40 ) de télégramme, qui contient les données de sortie et pour mettre à jour une séquence de caractères de validation par bloc.

3. Dispositif ( 1 ) suivant la revendication 1 ou 2, dans lequel le deuxième accès ( 22 ) est raccordé à une interface ( MII ) du circuit ( 2 ) intégré, qui est indépendante d'un support.

4. Dispositif ( 1 ) suivant l'une des revendications 1 à 3, dans lequel le module ( 5 ) est un module programmable, en étant conformé notamment sous la forme d'un field-programmable-gate-array.

5. Dispositif ( 1 ) suivant l'une des revendications 1 à 4, dans lequel les modules ( 31,32 ) de modulation sont sous la forme d'émetteur-récepteur pour une communication profinet, notamment une communication isochrone en temps réel.

6. Dispositif ( 1 ) suivant l'une des revendications 1 à 5, qui est sous la forme d'un dispositif ( 50 ) de support, sur lequel est disposé
- le circuit ( 2 ) intégré,
- les modules ( 31,32 ) de modulation,
- le module ( 5 ) et
- une liaison au système ( 10 ) de processeur,
qui a en outre un agencement ( 51 ) de broche pour l'embrochage dans un appareil ( 52 ) d'automatisation.

7. Dispositif ( 1 ) suivant l'une des revendications 1 à 6, dans lequel le système ( 10 ) de processeur est un système de processeur host extérieur, notamment un système ( 10 ) de processeur dans un appareil profinet de la technique d'automatisation industrielle.
